# FASCICULE DE BREVET EUROPEEN

(11) **EP 3 826 917 B1**
(45) Date de publication et mention de la délivrance du brevet: **07.09.2022**
(21) Numéro de dépôt: 19740414.8
(22) Date de dépôt: 23.07.2019
(51) Int. Cl.: B64C 1/14, E05F 1/10

(54) **DISPOSITIF D'OUVERTURE D'URGENCE D'UNE PORTE D'AÉRONEF, À ORGANE DE MANOEUVRE TELESCOPIQUE**
NOTÖFFNUNGSVORRICHTUNG FÜR EINE FLUGZEUGTÜR MIT EINEM TELESKOPISCHEN BETÄTIGUNGSELEMENT
EMERGENCY OPENING DEVICE FOR AN AIRCRAFT DOOR, COMPRISING A TELESCOPIC OPERATING MEMBER

(30) Priorité: 24.07.2018 FR 1856875
(43) Date de publication de la demande: 02.06.2021
(73) Titulaire: Latecoere, 31500 Toulouse, Occitanie (FR)
(72) Inventeur: MOLINARI, Didier, 31130 Balma (FR)
(74) Mandataire: Junca, Eric
(86) Numéro de dépôt international: PCT/EP2019/069748
(87) Numéro de publication internationale: WO 2020/020860

(56) Documents cités:
- EP-A1- 2 644 495
- DE-U1-202016 003 562
- FR-A1- 2 975 967
- US-A- 5 289 615
- US-A1- 2002 184 733
- US-A1- 2016 002 965

## Description

### DOMAINE TECHNIQUE

L'invention concerne le domaine de l'aéronautique et a trait à un dispositif d'ouverture d'urgence d'une porte d'aéronef dotée d'un mécanisme d'ouverture.

Les portes d'aéronefs qui comportent un mécanisme d'ouverture peuvent être ouvertes pour permettre la sortie et l'entrée de passagers ou pour permettre l'évacuation en cas d'urgence. En cas d'évacuation d'urgence des passagers, les portes d'aéronefs, qu'elles soient des portes de passager ou des portes d'évacuation d'urgence, comportent usuellement un dispositif d'ouverture d'urgence qui, s'il est activé, provoque une ouverture rapide et sans effort des portes, sans nécessiter d'intervention humaine.

De tels dispositifs d'ouverture d'urgence comprennent classiquement des moyens d'actionnement du mécanisme d'ouverture de la porte, commutables entre un état passif et un état actif d'activation du mécanisme d'ouverture (ce qui provoque l'ouverture de la porte), et des moyens d'activation des moyens d'actionnement (qui permettent à un utilisateur de déclencher l'ouverture d'urgence).

### ÉTAT DE LA TECHNIQUE

A l'heure actuelle, tel que notamment décrit dans les demandes de brevet FR2830564 et EP0741073, les moyens d'actionnement consistent classiquement en un actionneur de type pneumatique alimenté au moyen d'une réserve annexe de fluide moteur. De tels moyens d'actionnement présentent toutefois plusieurs inconvénients. En effet, et en premier lieu, ils s'avèrent d'un poids et d'un encombrement relativement importants, en raison notamment de la présence de la réserve annexe de fluide moteur. De plus, ils imposent d'effectuer un contrôle périodique de la pression du fluide moteur, et de remplacer périodiquement la réserve annexe même en l'absence d'utilisation de cette dernière. Enfin, après activation du dispositif d'ouverture d'urgence ces moyens d'actionnement imposent, en vue d'être à nouveau opérationnels, un remplacement de la réserve annexe de fluide moteur.

Une autre solution actuelle décrite notamment dans la demande de brevet FR2864021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remplacés après activation du dispositif d'ouverture d'urgence.

La demande de brevet FR2975967 décrit un dispositif d'ouverture d'urgence d'aéronef qui pallie les inconvénients décrits ci-dessus. Ce dispositif d'ouverture d'urgence consiste en des moyens d'actionnement de conception mécanique permettant de se passer d'éléments pneumatiques ou pyrotechniques. Par ailleurs, le dispositif d'ouverture d'urgence décrit rempli de plus une fonction d'ouverture de service permettant à la porte de s'ouvrir et se fermer en fonctionnement normal, c'est à dire hors des phases d'ouverture d'urgence. Le poids et l'encombrement du dispositif d'ouverture d'urgence sont ainsi réduits par rapport aux dispositifs décrits précédemment, la fiabilité est augmentée, et ce dispositif requiert peu ou pas de maintenance. Cependant, ce dispositif mécanique reste lourd et encombrant tandis que la réduction de la masse embarquée et la compacité des équipements sont une voie prioritaire d'amélioration des aéronefs.

### EXPOSÉ DE L'INVENTION

Le but de l'invention est d'améliorer les dispositifs d'ouverture d'urgence de l'art antérieur en fournissant un tel dispositif dont la masse et l'encombrement sont fortement réduits.

À cet effet, l'invention vise un dispositif d'ouverture d'urgence d'une porte d'aéronef dotée d'un mécanisme d'ouverture, comprenant :
- des moyens d'actionnement adaptés à actionner le mécanisme d'ouverture, commutables entre un état passif et un état actif d'activation du mécanisme d'ouverture, et comprenant : un organe de manœuvre tubulaire doté d'une première extrémité adaptée à être reliée à la porte, et d'une deuxième extrémité de verrouillage ; des moyens élastiques de compression disposés entre un élément de butée fixe et l'organe de manœuvre ; un organe de retenue de la deuxième extrémité de verrouillage, mobile entre une position fermée de verrouillage de la deuxième extrémité de verrouillage, dans une position de l'organe de manœuvrecorrespondant à l'état passif des moyens d'actionnement dans laquelle les moyens élastiques sont maintenus comprimés, et une position ouverte de libération de la deuxième extrémité de verrouillage autorisant le déplacement de l'organe de manœuvre selon un axe de déplacement vers une position correspondant à l'état actif des moyens d'actionnement, sous l'effet de l'effort résultant de l'expansion des moyens élastiques ;
- des moyens d'activation des moyens d'actionnement adaptés pour entrainer l'ouverture de l'organe de retenue ;
ce dispositif d'ouverture d'urgence comportant de plus les caractéristiques suivantes :
- l'organe de manœuvre comporte un élément de première extrémité et un élément de deuxième extrémité qui sont librement mobiles l'un par rapport à l'autre en translation suivant l'axe de déplacement, la première extrémité de l'organe de manœuvre étant située sur l'élément de première extrémité et la deuxième extrémité de verrouillage de l'organe de manœuvre étant située sur l'élément de deuxième extrémité ;
- l'élément de butée fixe comporte des moyens de fixation pour sa fixation sur un élément de porte de l'aéronef ;
- un cylindre d'axe s'étendant suivant l'axe de déplacement est fixé sur l'élément de butée fixe, l'élément de deuxième extrémité étant monté coulissant le long de l'axe de déplacement sur le cylindre d'axe ;
- l'organe de retenue comporte un verrou d'ouverture sous charge rotatif mobile en rotation autour de l'axe de déplacement, le verrou rotatif étant axialement fixé sur le cylindre d'axe entre deux butées axiales, le verrou rotatif étant en liaison pivot non glissant sur le cylindre d'axe, le verrou rotatif comportant au moins une languette s'étendant parallèlement à l'axe de déplacement et adaptée à retenir par traction sur une surface d'arrêt la deuxième extrémité de verrouillage de l'élément de deuxième extrémité ;
- les moyens d'activation des moyens d'actionnement comportent un levier solidaire du verrou rotatif et permettant de commander la rotation du verrou.

Dans la présente description et les revendications, l'expression « liaison avec la porte » s'entend relativement à la porte d'aéronef au sens large. La porte d'aéronef au sens large inclut l'ouvrant de la porte, le mécanisme d'ouverture de porte, ou encore la structure encadrant la porte et reliée au fuselage (correspondant au chambranle de la porte). Ainsi, la première extrémité de l'organe d'actionnement est reliée à un élément de la porte (ouvrant, mécanisme d'ouverture, ou structure encadrante) et l'élément de butée fixe est reliée à un autre élément de la porte (ouvrant, mécanisme d'ouverture, ou structure encadrante) tels que l'expansion des moyens élastiques provoque l'actionnement du mécanisme d'ouverture de la porte, et l'ouverture effective de la porte. Par exemple, la première extrémité de l'organe d'actionnement peut être fixée sur le mécanisme d'ouverture de la porte, et l'élément de butée fixe peut être fixé sur l'ouvrant de la porte. Autre exemple, la première extrémité de l'organe d'actionnement peut être fixée sur l'ouvrant de la porte, et l'élément de butée fixe peut être fixé sur la structure encadrante de la porte.

Un tel dispositif d'ouverture d'urgence présente tous les avantages d'un dispositif mécanique tel que décrit dans le document FR2975967. La conception mécanique des moyens d'actionnement ne requiert pas de maintenance particulière en l'absence d'utilisation du dispositif d'ouverture. L'utilisation du dispositif d'ouverture n'implique pas qu'un organe de déclenchement doive être remplacé, comme avec les dispositifs pneumatiques ou pyrotechniques. Aucun fluide moteur n'est nécessaire pour activer les moyens d'actionnement.

Le dispositif d'ouverture d'urgence selon l'invention présente de plus une masse et un encombrement réduit. Toutes les fonctions liées au déclenchement de l'ouverture d'urgence ainsi qu'à l'ouverture de service sont regroupées autour d'un même axe de déplacement de l'organe d'actionnement. Un tel dispositif forme un produit fini de type vérin mécanique entièrement autonome, ce qui est un gage de fiabilité et de sureté de fonctionnement appréciables dans le domaine de l'aéronautique et plus particulièrement des dispositifs d'ouverture de secours. En plus du gain de masse, qui est une caractéristique critique dans l'aéronautique, la compacité du dispositif permet son installation au sein de portes d'aéronefs complexes, comportant de nombreux équipements tels que dispositifs de sécurité, hublots, dispositifs de vision, dispositifs d'assistance divers, capotages esthétiques, etc.

Le dispositif selon l'invention est, de plus, entièrement mécanique et ne requiert aucun branchement à une source d'énergie externe ni à une commande déportée. Bien que le dispositif selon l'invention soit entièrement mécanique et autonome, il peut comporter des moyens élastiques à tarage important, c'est-à-dire destiné à exercer une force d'ouverture importante sur le mécanisme d'ouverture de la porte, ce qui est nécessaire dans cette application d'ouverture d'urgence de porte. Malgré le tarage important des éléments élastiques, l'activation des moyens d'actionnement se fait sans effort grâce à l'organe de retenue rotatif.

Le dispositif d'ouverture d'urgence selon l'invention peut comporter les caractéristiques additionnelles suivantes, seules ou en combinaison :
- l'élément de première extrémité et l'élément de deuxième extrémité sont montés coulissants l'un sur l'autre ;
- l'élément de première extrémité et l'élément de deuxième extrémité sont emboités l'un dans l'autre ;
- l'élément de première extrémité et l'élément de deuxième extrémité sont constitués d'éléments tubulaires ;
- l'élément de première extrémité et l'élément de deuxième extrémité sont constitués de tubes, le tube constituant l'élément de première extrémité étant inséré dans le tube constituant l'élément de deuxième extrémité ;
- l'organe de manœuvre comporte un palier de glissement pour le coulissement de l'élément de première extrémité sur l'élément de deuxième extrémité ;
- l'élément de deuxième extrémité comporte des moyens d'appui pour les moyens élastiques ;
- les moyens d'appui pour les moyens élastiques comportent une collerette solidaire de l'élément de deuxième extrémité ;
- les moyens élastiques sont disposés entre l'élément de butée fixe et les moyens d'appui ;
- l'élément de première extrémité comporte une butée coopérant avec les moyens d'appui de sorte que, dans l'état actif des moyens d'actionnement, l'élément de deuxième extrémité entraine l'élément de première extrémité ;
- la butée comporte une collerette solidaire de l'élément de deuxième extrémité ;
- l'organe de manœuvre est monté mobile en translation selon l'axe de déplacement sur un cylindre d'axe fixé sur l'élément de butée fixe ;
- l'élément de deuxième extrémité est monté coulissant autour du cylindre d'axe ;
- l'élément de deuxième extrémité comporte une portion de glissement ajustée au cylindre d'axe ;
- la portion de glissement comporte un palier de glissement ;
- l'élément de deuxième extrémité est monté coulissant à l'intérieur du cylindre d'axe ;
- l'élément de deuxième extrémité comporte une portion de glissement ajustée au cylindre d'axe ;
- le dispositif comporte une butée de fin de course pour le coulissement de l'organe de manœuvre par rapport au cylindre d'axe ;
- l'élément de première extrémité comporte des moyens d'accouplement du dispositif avec la porte ;
- l'élément de première extrémité comporte un trou d'évacuation de condensats.

### PRESENTATION DES FIGURES

D'autres caractéristiques et avantages de l'invention apparaitront à la lecture de la description non limitative qui suit, en référence aux dessins annexés dans lesquels :
- la figure 1 est une vue en perspective d'un dispositif d'ouverture d'urgence selon un premier mode de réalisation de l'invention, dans son état passif ;
- la figure 2 représente le dispositif de la figure 1 dans son état actif ;
- la figure 3 est une coupe longitudinale du dispositif dans sa position de la figure 1 ;
- la figure 4 est une coupe longitudinale du dispositif dans sa position de la figure 2 ;
- la figure 5 est similaire à la figure 3, l'organe de manœuvre étant en position d'ouverture de service ;
- la figure 6 est une vue agrandie du rectangle VI de la figure 5 ;
- la figure 7 représente l'organe de retenue et le doigt axial de retenue du dispositif dans sa position de la figure 1 ;
- la figure 8 représente en perspective l'organe de retenue et le doigt axial de retenue du dispositif dans sa position de la figure 2 ;
- la figure 9 représente les éléments de la figure 7 vus de dessus ;
- la figure 10 est une vue en perspective d'un dispositif d'ouverture d'urgence selon un deuxième mode de réalisation de l'invention, dans son état passif ;
- la figure 11 représente le dispositif de la figure 10 dans son état actif ;
- la figure 12 est une coupe longitudinale du dispositif de la figure 10 dans sa position de la figure 10 ;
- la figure 13 est une coupe longitudinale du dispositif de la figure 10 dans sa position de la figure 11 ;
- la figure 14 est similaire à la figure 12, l'organe de manœuvre étant en position d'ouverture de service ;
- la figure 15 est une vue agrandie du rectangle XV de la figure 14 ;
- la figure 16 est une vue de face de l'organe de retenue du dispositif dans sa position de la figure 10 ;
- la figure 17 est une vue de face de l'organe de retenue du dispositif dans sa position de la figure 11.

### DESCRIPTION DÉTAILLÉE

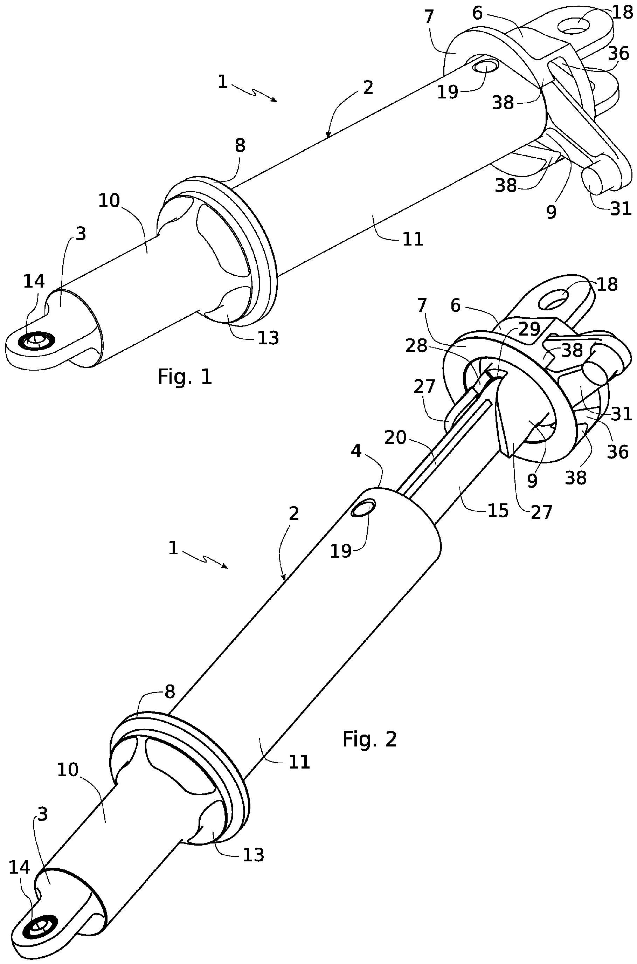

Les figures 1 à 9 visent un premier mode de réalisation de l'invention.

Le dispositif 1 d'ouverture d'urgence de porte d'aéronef selon ce premier mode de réalisation est représenté en perspective aux figures 1 et 2, respectivement dans son état passif et dans son état actif. Ce dispositif 1 est destiné à être relié par ses extrémités à des éléments de la porte d'aéronef de sorte que l'expansion de ce dispositif 1 (dans l'état actif, figure 2) provoque l'ouverture d'urgence de la porte.

Ce dispositif 1 d'ouverture d'urgence peut être positionné sur tout type de porte ou d'ouvrant d'un aéronef, disposant d'un mécanisme d'ouverture. Les mécanismes d'ouverture de porte d'aéronef sont bien connus et ne seront pas décrits plus en détail ici. Le dispositif 1 peut par exemple être monté pour coopérer avec un mécanisme d'ouverture de porte à transmission par chaine tel que décrit dans le document FR2975967, ou encore dans d'autres mécanismes d'ouverture connus tels que des mécanismes à biellettes formant un parallélogramme déformable.

Quel que soit le type de mécanisme d'ouverture de porte d'aéronef, le dispositif 1 d'ouverture d'urgence permet, lorsqu'il est activé par un utilisateur, l'ouverture rapide et automatique de la porte de l'aéronef en vue de l'évacuation de ce dernier.

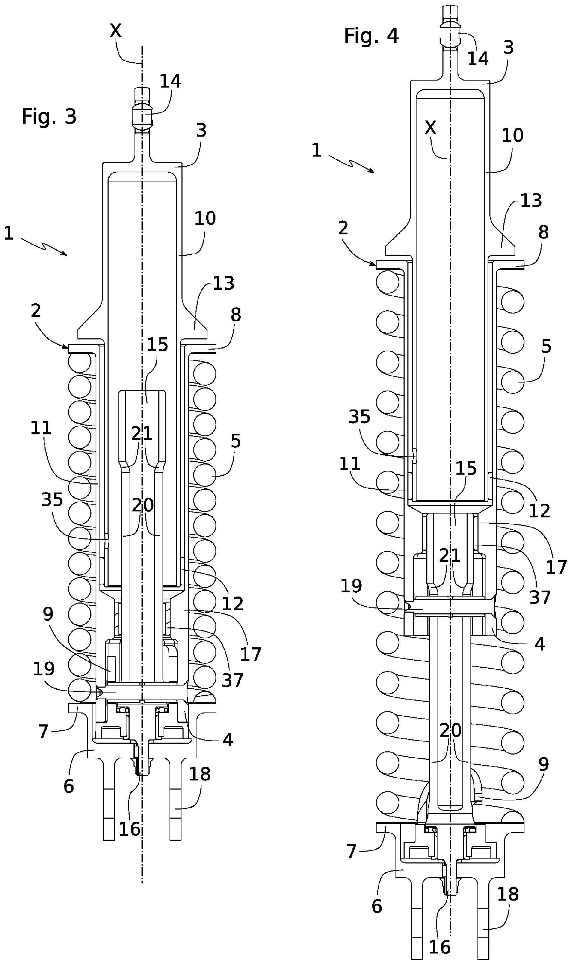

En référence aux figures 3 et 4, le dispositif 1 comporte des moyens d'actionnement du mécanisme d'ouverture de la porte qui sont commutables entre l'état passif de la figure 1 et l'état actif de la figure 2. Dans l'état passif, le dispositif 1 n'exerce pas d'effort sur la porte ou le mécanisme d'ouverture de la porte, la fonction d'ouverture d'urgence n'est pas activée, ce qui correspond à l'état normal de fonctionnement du mécanisme d'ouverture de la porte. Dans l'état actif, en cas d'urgence et lorsque l'évacuation de l'aéronef est nécessaire, le mécanisme d'ouverture de la porte est activé grâce à une force exercée par le dispositif 1 jusqu'à l'ouverture complète de la porte (dispositif 1 dans la position des figures 2 et 4).

En référence aux figures 3 et 4, ces moyens d'actionnement du mécanisme d'ouverture de la porte comprennent un organe de manœuvre tubulaire 2 qui est mobile selon un axe de déplacement X qui est son axe longitudinal. Cet organe de manœuvre 2 comporte une première extrémité 3 de liaison avec un élément de la porte non représenté (par exemple le mécanisme d'ouverture), et comporte une deuxième extrémité 4 dite de verrouillage. La première extrémité 3 comporte une rotule 14 permettant l'accouplement du dispositif 1 avec un élément de la porte.

Dans toute la description et les revendications, les références « axial » et « radial » se référent a l'axe X.

Les moyens d'actionnement comportent également des moyens élastiques de compression qui sont constitués ici d'un ressort 5 cylindrique qui est disposé entre un élément de butée fixe 6 et l'organe de manœuvre 2. Sur les figures 1 et 2, le ressort 5 n'a pas été représenté pour simplifier la figure. L'élément de butée fixe 6 comporte une collerette 7 permettant l'appui d'une extrémité du ressort 5 et l'organe de manœuvre 2 comporte également une collerette 8 permettant l'appui de l'autre extrémité du ressort 5. Dans l'état passif des moyens d'actionnement, le ressort 5 est comprimé et les deux collerettes 7, 8 sont rapprochées au maximum, tandis que dans son état actif, les deux collerettes 7, 8 sont éloignées l'une de l'autre sous l'effet de la force du ressort 5. L'élément 6 de butée fixe comporte deux trous de fixation 18 pour sa fixation sur un élément de la porte de l'aéronef de telle sorte que l'expansion du ressort 5 provoquera l'ouverture de cette porte.

Les moyens d'actionnement du dispositif 1 comportent de plus un organe de retenue de la deuxième extrémité de verrouillage 4 de l'organe de manœuvre 2, cet organe de retenue étant ici constitué d'un verrou rotatif 9 qui est mobile en rotation autour de l'axe longitudinal de l'organe de manœuvre 2.

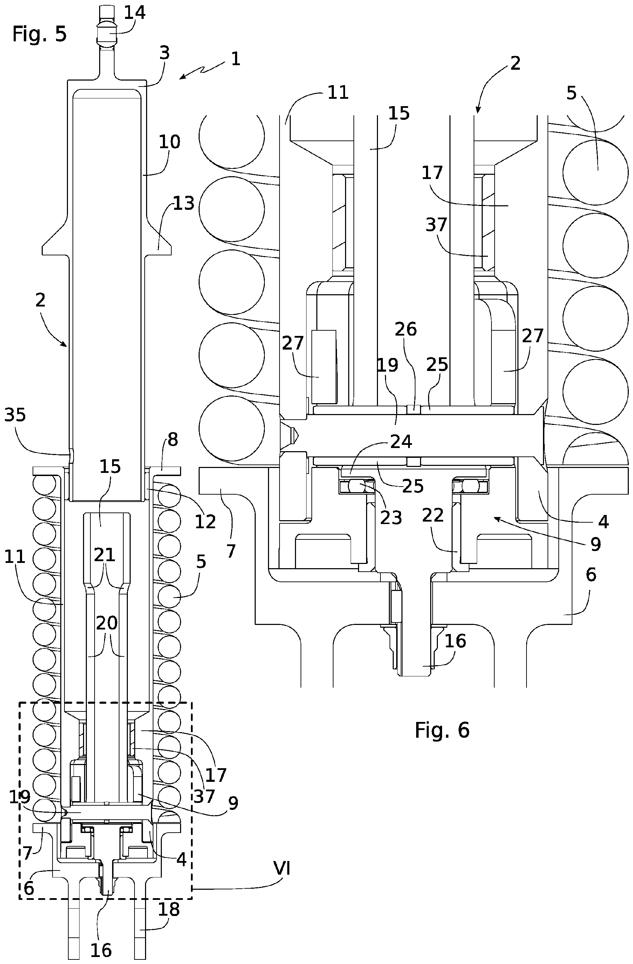

L'organe de manœuvre 2 est un élément télescopique constitué d'un tube 10 de première extrémité et d'un tube 11 de deuxième extrémité pouvant coulisser l'un dans l'autre. Dans le présent exemple, le tube 10 de première extrémité présente un diamètre externe inférieur au diamètre interne du tube 11 de deuxième extrémité de sorte que le tube 10 de première extrémité puisse être inséré à l'intérieur du tube 11 de deuxième extrémité sur une portion d'emmanchement. Un palier de glissement 12, réalisé dans un matériau à faible coefficient de frottement, est de plus monté entre le tube 10 de première extrémité et le tube 11 de deuxième extrémité de sorte que le coulissement du tube 10 de première extrémité par rapport au tube 11 de deuxième extrémité entraine le coulissement du palier de glissement 12 contre les parois internes du tube 11 de deuxième extrémité. Un trou 35 pratiqué dans le tube 10 de première extrémité permet l'évacuation d'éventuels condensats se formant à l'intérieur du dispositif 1. Le caractère télescopique de l'organe de manœuvre 2 permet une fonction dite d'ouverture de service décrite plus loin. La figure 5 représente le dispositif 1 avec l'organe de manœuvre 2 en position d'ouverture de service.

Le tube 10 de première extrémité constitue ainsi la première extrémité 3 de l'organe de manœuvre 2. Le tube 10 de première extrémité est de plus muni d'une collerette 13 coopérant avec la collerette 8 qui est, quant à elle, réalisée sur le tube 11 de deuxième extrémité. Les deux collerettes 8, 13 coopèrent de sorte que, lorsque le ressort 5 repousse l'organe de manœuvre 2 (état actif des moyens d'actionnement, voir figure 4) le ressort 5 prend appui sur la collerette 8 qui, elle-même, prend appui sur la collerette 13 et qui repousse donc l'ensemble de l'organe de manœuvre 2 en l'éloignant de l'élément de butée fixe 6. Le tube 10 de première extrémité est alors emmanché au maximum dans le tube 11 de deuxième extrémité, les collerettes 8, 13 venant en butée l'une contre l'autre.

L'ensemble de l'organe de manœuvre 2 (qui est donc constitué du tube 10 de première extrémité et du tube 11 de deuxième extrémité) peut se déplacer longitudinalement, le long de l'axe X, entre les deux positions extrêmes des figures 3 et 4, lorsque l'ouverture d'urgence est déclenchée. Ce mouvement de l'organe de manœuvre 2 est réalisé par coulissement de l'organe de manœuvre 2 sur un cylindre d'axe 15. Le cylindre d'axe 15 est un cylindre fixé sur l'élément de butée fixe 6 par des moyens de vissage 16. Le cylindre d'axe 15 fournit une liaison glissière pour le guidage longitudinal, le long de l'axe X, de l'organe de manœuvre 2 grâce à une portion de glissement 17 munie d'un palier de glissement 37, du tube 11 de deuxième extrémité.

L'organe de manœuvre 2 rempli sa fonction d'ouverture de service, en plus de l'ouverture d'urgence, grâce à son caractère télescopique en permettant l'ouverture et la fermeture de la porte d'aéronef dans des conditions normales d'utilisation, c'est à dire hors des périodes d'ouverture d'urgence, le dispositif d'ouverture d'urgence étant maintenu dans un état passif et le ressort 5 restant comprimé. Pour cette fonction, un coulissement le long de l'axe X est possible entre le tube 10 de première extrémité et le tube 11 de deuxième extrémité grâce au palier de glissement 12 décrit précédemment.

Lorsque le dispositif 1 est dans sa position de la figure 3, la porte d'aéronef est fermée. À partir de cette position, la porte peut s'ouvrir selon deux modes :
- un mode d'ouverture d'urgence dans lequel les moyens d'actionnement sont activés. L'expansion du ressort 5 va alors provoquer l'éloignement de l'élément de butée fixe 6 et du tube 11 de deuxième extrémité l'un de l'autre (grâce aux collerettes 7, 8). La collerette 8 va de plus entrainer elle-même la collerette 13, donc le tube de première extrémité 10, suivant l'axe X. L'ensemble de l'organe de manœuvre 2 rejoint donc la position des figures 2 et 4, la porte étant ouverte suite à l'action de la poussée du ressort 5 ;
- un mode d'ouverture de service, dans lequel le tube 10 de première extrémité coulisse librement dans le tube 11 de deuxième extrémité, sous l'effet de la porte qui est ouverte par une action extérieure, jusqu'à la position de la figure 5 correspondant à l'ouverture totale de la porte d'aéronef.

Pour permettre le verrouillage de l'organe de manœuvre 2 dans sa position de figures 1 et 3, le tube 11 de deuxième extrémité comporte un doigt axial de retenue 19 traversant le tube 11 de part en part, suivant un diamètre. Le doigt 19 peut être constitué, par exemple, d'un axe métallique plein, d'une goupille, ou d'une vis, qui peuvent être vissés ou sertis sur le tube 11.

Le doigt 19 est inséré dans une double rainure 20 pratiquée dans le cylindre d'axe 15 empêchant la rotation relative du tube 11 de deuxième extrémité par rapport au cylindre d'axe 15 selon l'axe longitudinal. Une liaison glissière est ainsi réalisée entre l'organe de manœuvre 2 et le cylindre d'axe 15.

Le doigt 19 assure de plus une fonction de butée de fin de course. Dans la position de fin de course de la figure 4, l'organe de manœuvre 2 est arrêté grâce à la butée du doigt 19 contre des surfaces d'extrémité 21 de la double rainure 20.

La figure 6 est une vue agrandie du cadre VI de la figure 3. Dans cette position verrouillée, le verrou rotatif 9 est en position fermée et coopère avec le doigt 19 pour la retenue de la deuxième extrémité 4 de l'organe de manœuvre 2.

Le verrou rotatif 9 est monté sur le cylindre d'axe 15 selon une liaison pivot permettant sa rotation autour de l'axe X, grâce à une bague glissante 22 présentant un faible coefficient de frottement. Le verrou rotatif 9 est axialement fixé sur le cylindre d'axe 15 entre deux butées axiales glissantes constituées par une butée à bille 23 disposée entre le verrou rotatif 9 et un épaulement 24 du cylindre d'axe 15, ainsi que par une collerette d'arrêt axial 39 de la bague glissante 22. Le verrou rotatif 9 est ainsi en liaison pivot non glissant sur le cylindre d'axe 15. La butée à bille 23 et la bague glissante 22 permettent une rotation avec peu d'effort de frottement du verrou rotatif 9 par rapport au cylindre d'axe 15. Le verrou rotatif 9 est solidaire d'un moyen d'activation constitué par un levier 31 permettant de commander la rotation du verrou 9. Le levier 31 est mobile dans une fenêtre de travail 36 pratiquée dans l'élément 6 de butée fixe et interrompant la collerette 7 d'appui pour le ressort 5 (voir figures 1 et 2). L'élément 6 de butée fixe comporte deux avancées 38 permettant de maximiser la surface d'appui pour les ressorts 5, compte tenu de la présence de la fenêtre de travail 36.

Le doigt 19 comporte par ailleurs deux bagues de roulage 25 dans le prolongement l'une de l'autre avec, entre les deux bagues de roulage 25, un anneau séparateur 26. Les deux bagues de roulage 25, et éventuellement l'anneau séparateur 26, sont en liaison pivot avec le doigt 19, avec une rotation possible autour de l'axe longitudinal du doigt 19.

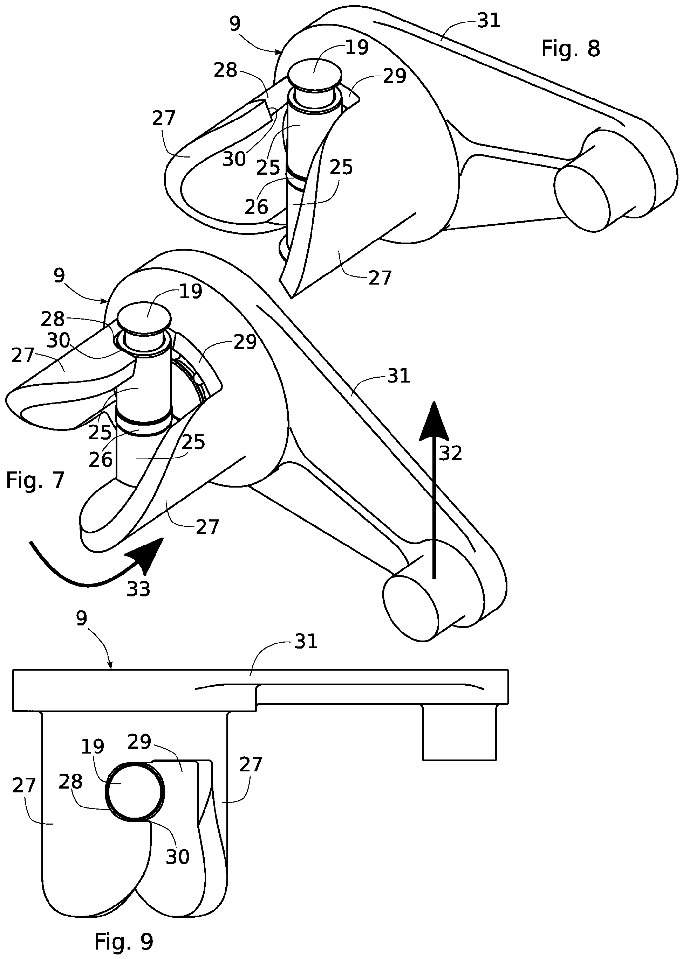

La coopération du verrou rotatif 9 et du doigt 19 va être décrite en référence aux figures 7 et 8 qui représentent uniquement ces deux organes 9, 19 pour les besoins de la description. Sur la figure 7, le verrou rotatif 9 est dans sa position fermée où il retient le doigt 19, et donc la deuxième extrémité 4 de l'organe de manœuvre 2, à l'encontre du ressort 5 qui est comprimé (ce qui correspond à la position de la figure 3). Sur la figure 8, le verrou rotatif 9 est dans sa position ouverte et ne retient plus le doigt 19, ce qui correspond à une libération de la deuxième extrémité 4 de l'organe de manœuvre 2, préalable à une expansion du ressort 5 qui conduira à la position de la figure 4.

Le verrou rotatif 9 comporte deux languettes 27 opposées qui comportent chacune un crochet 28, ces deux languette 27 s'étendant axialement c'est à dire parallèlement à l'axe X. Deux gorges 29 sont prévues entre les deux languettes 27 de sorte que, dans la position ouverte de la figure 8, le doigt 19 de la deuxième extrémité 4 puisse être inséré dans le fond des gorges 29 et, dans la position fermée de la figure 7, une rotation du verrou rotatif 9 vers sa position fermée entraine une retenue du doigt 19 par les crochets 28.

La figure 9 est une vue de dessus de la figure 6 et montre la coopération d'un crochet 28 avec le doigt 19. Le crochet 28 retient le doigt 19 par l'intermédiaire d'une surface d'arrêt 30 contre laquelle le doigt 19 est contraint par la force du ressort 5. La surface d'arrêt 30 est orthogonale à l'axe X.

Le verrou rotatif 9 permet ainsi, grâce aux languettes 27, de retenir par traction sur la surface d'arrêt 30 la deuxième extrémité 4 de l'élément de deuxième extrémité 11.

Lorsque le dispositif 1 est dans la position des figures 1 et 3, le verrou rotatif 9 étant dans sa position fermée de la figure 7, l'ouverture d'urgence peut être actionnée par un utilisateur en actionnant le levier 31 selon la flèche 32 de la figure 7, ce qui entraine une rotation du verrou rotatif 9 selon la flèche 33. Chaque bague de roulage 25 va ensuite rouler sur la surface d'arrêt 30 (en tournant chacune par rapport au doigt 19 mais dans un sens opposé) jusqu'à la position de la figure 8 où le verrou rotatif 9 est en position ouverte et où l'organe de manœuvre 2, qui n'est alors plus retenu, est immédiatement poussé par le ressort 5 vers sa position de la figure 4, ce qui entraine l'ouverture d'urgence. L'anneau séparateur 26 permet la rotation des bagues de roulage 25 dans deux sens opposés.

Le verrou rotatif 9 constitue ainsi un verrou d'ouverture sous charge car il permet la libération de l'organe de manœuvre 2 durant le mode d'ouverture d'urgence, cette libération étant réalisée sans comprimer le ressort 5.

Optionnellement, le levier 31 peut également être sécurisé contre les déclenchements intempestifs par une goupille telle qu'une broche à bille.

Des variantes de réalisation de ce premier mode de réalisation peuvent être envisagées sans sortir du cadre de l'invention selon les revendications annexées. Par exemple, les languettes 27 du verrou rotatif 9 peuvent entourer, par l'extérieur, le tube 11 de deuxième extrémité, plutôt que d'être insérées à l'intérieur de ce tube 11. Le doigt 19 serait alors saillant de part et d'autre du tube 11 de deuxième extrémité pour coopérer avec les crochets 28.

Par ailleurs, le nombre de languettes 27 et de crochets 28 peut varier, au moins un crochet 28 étant nécessaire pour coopérer avec le doigt 19.

L'activation du dispositif 1 d'ouverture d'urgence peut se faire par d'autres moyens qu'un levier, par exemple une crémaillère permettant de faire tourner le verrou rotatif 9.

Le cylindre d'axe 15 peut par exemple entourer le tube 11 de deuxième extrémité au lieu du contraire.

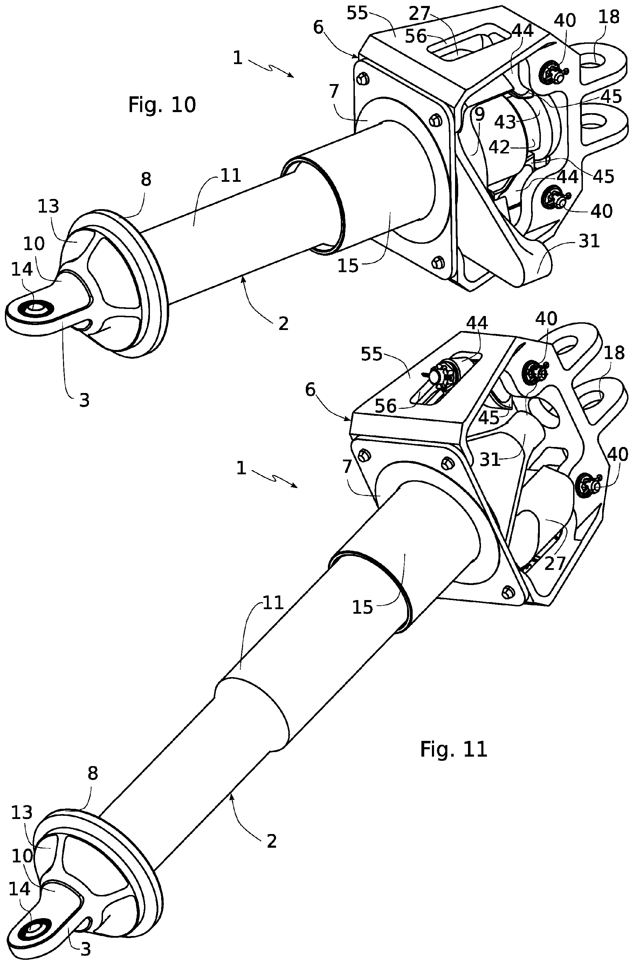

Les figures 10 à 17 visent un deuxième mode de réalisation de l'invention. Les éléments similaires entre le premier mode de réalisation et le deuxième mode de réalisation reprennent les mêmes numéros de renvoi aux figures.

Le dispositif 1 d'ouverture d'urgence de porte d'aéronef selon ce deuxième mode de réalisation de l'invention est représenté en perspective aux figures 10 et 11, respectivement dans son état passif et dans son état actif. Ce dispositif 1 est destiné à être relié par ses extrémités à des éléments de la porte d'aéronef de sorte que l'expansion de ce dispositif 1 (dans l'état actif, figure 11) provoque l'ouverture d'urgence de la porte.

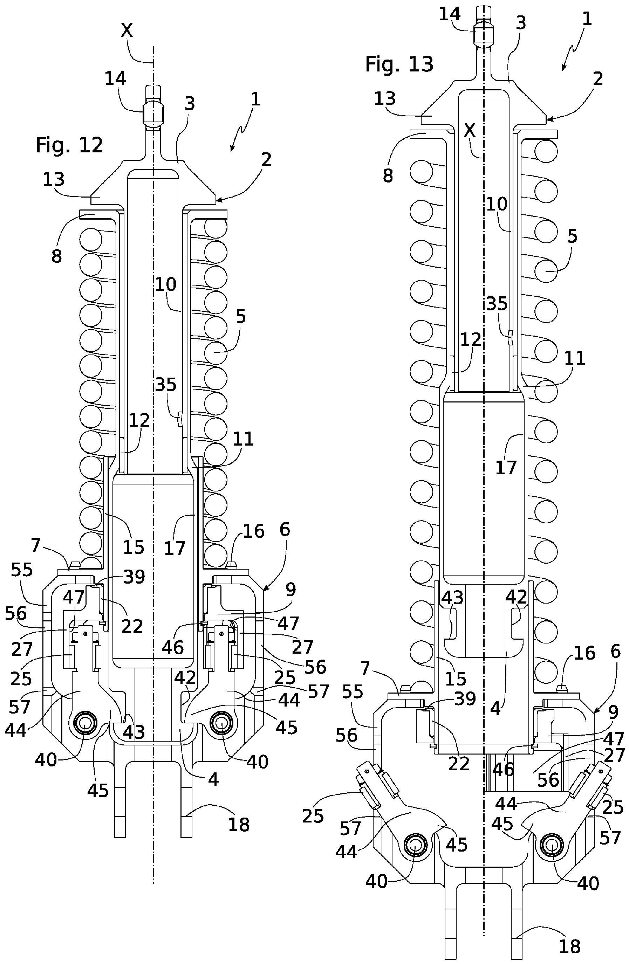

En référence aux figures 12 et 13, le dispositif 1 comporte des moyens d'actionnement du mécanisme d'ouverture de la porte qui sont commutables entre l'état passif de la figure 10 et l'état actif de la figure 11. Dans l'état passif, le dispositif 1 n'exerce pas d'effort sur la porte ou le mécanisme d'ouverture de la porte, la fonction d'ouverture d'urgence n'est pas activée, ce qui correspond à l'état normal de fonctionnement du mécanisme d'ouverture de la porte. Dans l'état actif, en cas d'urgence et lorsque l'évacuation de l'aéronef est nécessaire, le mécanisme d'ouverture de la porte est activé grâce à une force exercée par le dispositif 1 jusqu'à l'ouverture complète de la porte (dispositif 1 dans la position des figures 11 et 13).

En référence aux figures 12 et 13, ces moyens d'actionnement du mécanisme d'ouverture de la porte comprennent un organe de manœuvre tubulaire 2 qui est mobile selon un axe de déplacement X qui est son axe longitudinal. Cet organe de manœuvre 2 comporte une première extrémité 3 de liaison avec un élément de la porte non représenté (par exemple le mécanisme d'ouverture), et comporte une deuxième extrémité 4 dite de verrouillage. La première extrémité 3 comporte une rotule 14 permettant l'accouplement du dispositif 1 avec un élément de la porte.

Les moyens d'actionnement comportent également des moyens élastiques de compression qui sont constitués ici d'un ressort 5 cylindrique qui est disposé entre un élément de butée fixe 6 et l'organe de manœuvre 2. Sur les figures 10 et 11, le ressort 5 n'a pas été représenté pour simplifier la figure. L'élément de butée fixe 6 comporte une collerette 7 permettant l'appui d'une extrémité du ressort 5 et l'organe de manœuvre 2 comporte également une collerette 8 permettant l'appui de l'autre extrémité du ressort 5. Dans l'état passif des moyens d'actionnement, le ressort 5 est comprimé et les deux collerettes 7, 8 sont rapprochées au maximum, tandis que dans son état actif, les deux collerettes 7, 8 sont éloignées l'une de l'autre sous l'effet de la force du ressort 5. L'élément 6 de butée fixe comporte deux trous de fixation 18 pour sa fixation sur un élément de la porte de l'aéronef de telle sorte que l'expansion du ressort 5 provoquera l'ouverture de cette porte.

Les moyens d'actionnement du dispositif 1 comportent de plus un organe de retenue de la deuxième extrémité de verrouillage 4 de l'organe de manœuvre 2, cet organe de retenue étant ici constitué d'un verrou rotatif 9 ainsi que deux leviers de verrouillage 44. Le verrou rotatif 9 est monté tournant autour de l'axe X et les leviers 44 sont montés pivotants sur l'élément de butée fixe 6, chacun autour d'un axe de pivot 40. L'organe de retenue est mobile entre une position fermée, dans laquelle le verrou rotatif 9 maintient les leviers 44 dans une position de verrouillage (figure 12), et une position ouverte, dans laquelle le verrou rotatif 9 relâche les leviers 44 (figure 13).

L'élément de butée fixe 6 comporte deux fenêtres 56 permettant le passage des leviers 44 lorsqu'ils sont en position ouverte (figure 13). Ces fenêtres 56 définissent par ailleurs chacune une butée 57 contre laquelle le levier 44 correspondant vient en appui lorsqu'il est dans cette position ouverte.

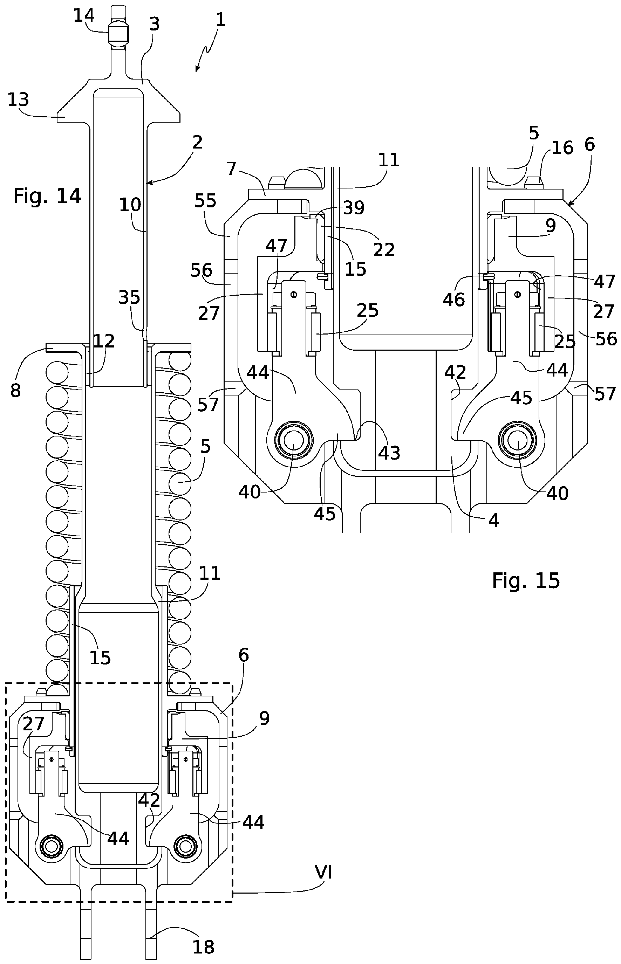

L'organe de manœuvre 2 est un élément télescopique constitué d'un tube 10 de première extrémité et d'un tube 11 de deuxième extrémité pouvant coulisser l'un dans l'autre. Dans le présent exemple, le tube 10 de première extrémité présente un diamètre externe inférieur à un diamètre interne du tube 11 de deuxième extrémité de sorte que le tube 10 de première extrémité puisse être inséré à l'intérieur du tube 11 de deuxième extrémité sur une portion d'emmanchement. Un palier de glissement 12, réalisée dans un matériau à faible coefficient de frottement, est de plus monté entre le tube 10 de première extrémité et le tube 11 de deuxième extrémité de sorte que le coulissement du tube 10 de première extrémité par rapport au tube 11 de deuxième extrémité entraine le coulissement du palier de glissement 12 contre les parois internes du tube 11 de deuxième extrémité. Un trou 35 pratiqué dans le tube 10 de première extrémité permet l'évacuation d'éventuels condensats se formant à l'intérieur du dispositif 1. Le caractère télescopique du l'organe de manœuvre 2 permet une fonction dite d'ouverture de service décrite plus loin. La figure 14 représente le dispositif 1 avec l'organe de manœuvre 2 en position d'ouverture de service.

Le tube 10 de première extrémité constitue ainsi la première extrémité 3 de l'organe de manœuvre 2. Le tube 10 de première extrémité est de plus muni d'une collerette 13 coopérant avec la collerette 8 qui est, quant à elle, réalisée sur le tube 11 de deuxième extrémité. Les deux collerettes 8, 13 coopèrent de sorte que, lorsque le ressort 5 repousse l'organe de manœuvre 2 (état actif des moyens d'actionnement, voir figure 13) le ressort 5 prend appui sur la collerette 8 qui, elle-même, prend appui sur la collerette 13 et qui repousse donc l'ensemble de l'organe de manœuvre 2 en l'éloignant de l'élément de butée fixe 6. Le tube 10 de première extrémité est alors emmanché au maximum dans le tube 11 de deuxième extrémité, les collerettes 8, 13 venant en butée l'une contre l'autre.

L'ensemble de l'organe de manœuvre 2 (qui est donc constitué du tube 10 de première extrémité et du tube 11 de deuxième extrémité) peut se déplacer longitudinalement, le long de l'axe X, entre les deux positions extrêmes des figures 12 et 13, lorsque l'ouverture d'urgence est déclenchée. Ce mouvement de l'organe de manœuvre 2 est réalisé par coulissement de l'organe de manœuvre 2 à l'intérieur d'un cylindre d'axe 15. Le cylindre d'axe 15 est un cylindre fixé sur l'élément de butée fixe 6 par des moyens de vissage 16. Dans le présent exemple, la collerette 7 d'appui du ressort 5 sur l'élément de butée fixe 6 est formée par une couronne saillante du cylindre d'axe 15. l'élément de butée fixe 6 comporte ainsi : un corps 55 muni des trous de fixation 18, et sur lequel est monté pivotant le levier 44 ; la collerette 7 rattachée au cylindre d'axe 15, le ressort 5 étant appuyé sur la collerette 7.

Le cylindre d'axe 15 fournit une liaison glissière pour le guidage longitudinal, le long de l'axe X, de l'organe de manœuvre 2 grâce à une portion de glissement 17 prévue sur le tube 11 de deuxième extrémité, le diamètre externe de la portion de glissement 17 étant ajusté au diamètre interne du cylindre d'axe 15.

L'organe de manœuvre 2 rempli sa fonction d'ouverture de service, en plus de l'ouverture d'urgence, grâce à son caractère télescopique en permettant l'ouverture et la fermeture de la porte d'aéronef dans des conditions normales d'utilisation, c'est à dire hors des périodes d'ouverture d'urgence, le dispositif d'ouverture d'urgence étant maintenu dans un état passif et le ressort 5 restant comprimé. Pour cette fonction, un coulissement le long de l'axe X est possible entre le tube 10 de première extrémité et le tube 11 de deuxième extrémité grâce au palier de glissement 12 décrit précédemment.

Lorsque le dispositif 1 est dans sa position de la figure 12, la porte d'aéronef est fermée. À partir de cette position, la porte peux s'ouvrir selon deux modes :
- un mode d'ouverture d'urgence dans lequel les moyens d'actionnement sont activés. L'expansion du ressort 5 va alors provoquer l'éloignement du l'élément de butée fixe 6 et du tube 11 de deuxième extrémité l'un de l'autre (grâce aux collerettes 7, 8). La collerette 8 va de plus entrainer elle-même la collerette 13, donc le tube de première extrémité 10, suivant l'axe X. L'ensemble de l'organe de manœuvre 2 rejoint donc la position des figures 11 et 13, la porte étant ouverte suite à l'action de la poussée du ressort 5 ;
- un mode d'ouverture de service, dans lequel le tube 10 de première extrémité coulisse librement dans le tube 11 de deuxième extrémité, sous l'effet de la porte qui est ouverte par une action extérieure, jusqu'à la position de la figure 14 correspondant à l'ouverture totale de la porte d'aéronef.

Pour permettre le verrouillage de l'organe de manœuvre 2 dans sa position des figures 10 et 12, la deuxième extrémité 4 de l'organe de manœuvre 2 est munie d'une gâche qui est ici constituée par une gorge 42 pratiquée dans le tube 11 de deuxième extrémité. La gorge 42 présente une surface d'arrêt 43 sensiblement orthogonale à l'axe X.

La figure 15 est une vue agrandie du cadre XV de la figure 14. Dans cette position verrouillée, le verrou rotatif 9 est en position fermée et retient donc les leviers 44 dans une position verrouillée. Dans cette position verrouillée, les leviers 44 coopèrent avec la gorge 42 pour la retenue de la deuxième extrémité 4 de l'organe de manœuvre 2. Les leviers 44 comportent chacun une dent de verrouillage 45 engagée contre la surface d'arrêt 43 de la gorge 42 de sorte que, tant que les leviers 44 sont maintenus dans cette position verrouillée par le verrou rotatif 9, l'organe de manœuvre 2 est retenu par les leviers 44.

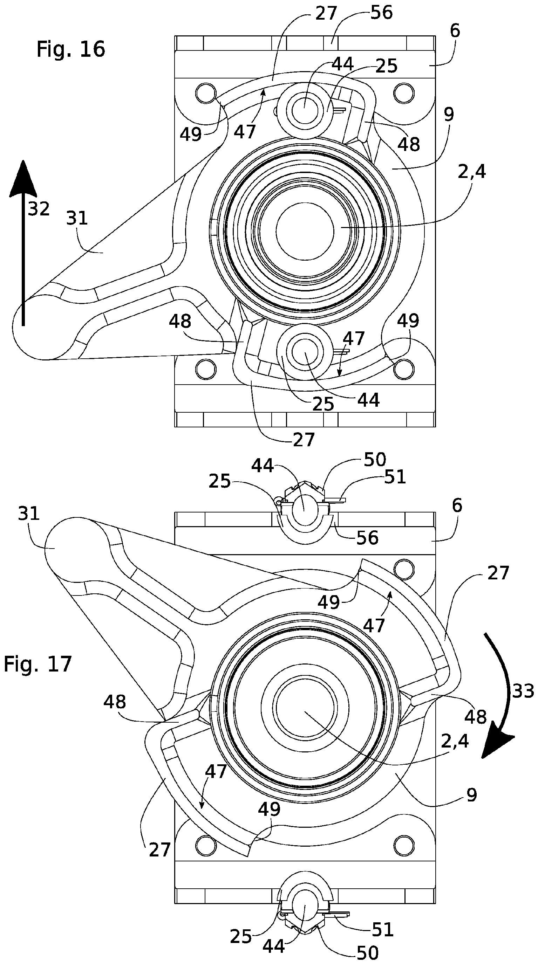

En référence aux figures 15 et 16, la coopération du verrou rotatif 9 et des leviers 44 va être décrite. Le verrou rotatif 9 présente une forme générale annulaire lui permettant d'être monté tournant sur le cylindre d'axe 15, de sorte qu'une rotation du verrou rotatif 9 par rapport au cylindre d'axe 15 est permise suivant une rotation autour de l'axe X. Dans le présent exemple, le verrou rotatif 9 est monté sur une bague glissante 22 présentant un faible coefficient de frottement. Le verrou rotatif 9 est solidaire d'un moyen d'activation constitué par un levier de commande 31 permettant de commander la rotation du verrou 9.

Le verrou rotatif 9 est immobilisé axialement sur le cylindre d'axe 15 par deux butées axiales glissantes constituées par une collerette d'arrêt axial 39 de la bague glissante 22 et par un anneau élastique 46 monté sur le cylindre d'axe 15. Le verrou rotatif 9 est ainsi en liaison pivot non glissant sur le cylindre d'axe 15. La bague glissante 22 permet une rotation avec peu d'effort de frottement du verrou rotatif 9 par rapport au cylindre d'axe 15.

Le verrou rotatif 9 comporte deux languettes 27 s'étendant axialement en direction des leviers 44. Chaque languette 27 forme une surface de maintien 47 qui est une portion d'un cylindre qui est centré sur l'axe X. En plus de la surface de maintien 47, chaque languette 27 comporte une butée d'arrêt 48 en position verrouillée. Sur la surface de maintien 47, à l'opposé de la butée 48, chaque languette 27 comporte un rebord libre 49 permettant la libération du levier 44 correspondant, comme exposé ci-après.

Les leviers 44 comportent de plus chacun une bague de roulage 25, montée rotative sur le levier 44 correspondant. Chaque bague de roulage 25 est maintenue sur le levier 44 correspondant par un arrêt en bout de levier, constitué dans cet exemple par un écrou 50 sécurisé par une goupille 51. Les bagues de roulage 25 sont réalisées de préférence à partir d'un matériau à faible coefficient de frottement pour minimiser les efforts lors de la rotation de la bague de roulage 25 par rapport au levier 44 correspondant.

Lorsque l'organe de retenue est en position fermée, le verrou rotatif 9 est en position verrouillée (voir figures 15 et 16) et les leviers 44 sont maintenus dans une position verrouillée par la surface de maintien 47 de la languette 27 correspondante. Dans la position verrouillée des leviers 44, les dents de verrouillage 45 retiennent l'organe de manœuvre 2 par sa deuxième extrémité 4, grâce à la surface d'arrêt 43 de la gorge 42.

Le verrou rotatif 9 permet ainsi, grâce aux languettes 27, de retenir par traction sur la surface d'arrêt 43 la deuxième extrémité 4 de l'élément de deuxième extrémité 11.

Lorsqu'il est question de déclencher le dispositif 1 d'ouverture de secours, en cas d'urgence et en vue d'évacuer l'aéronef, un utilisateur actionne le levier de commande 31 en exerçant une force selon la flèche 32 de la figure 16, ce que provoque une rotation du verrou rotatif 9 selon la flèche 33. Les bagues de roulage 25 des leviers 44 vont alors chacune rouler sur la surface de maintien 47, avec très peu d'efforts, en direction des rebords libres 49. Lorsque les bagues de roulage 25 franchissent les rebords libres 49, les leviers 44 ne sont plus retenus par le verrou rotatif 9 (voir figure 17). Lorsque les leviers 44 ne sont plus retenus par le verrou rotatif 9, le ressort 5 (qui sollicite constamment la surface d'arrêt 43 de la gorge 42 contre les dents de verrouillage 45) provoque la rotation des leviers 44 autour de leur axe 40 de sorte que les dents de verrouillage 45 s'écartent de la gorge 42 et la deuxième extrémité 4 de l'organe de manœuvre 2 n'est alors plus retenue. Le ressort 5 provoque alors le déplacement de l'organe de manœuvre 2 suivant l'axe X, jusqu'à la position de la figure 13, et donc l'ouverture d'urgence de la porte.

Le verrou rotatif 9 constitue ainsi un verrou d'ouverture sous charge car il permet la libération de l'organe de manœuvre 2 durant le mode d'ouverture d'urgence, cette libération étant réalisée sans comprimer le ressort 5.

Optionnellement, le levier de commande 31 peut également être sécurisé contre les déclenchements intempestifs par une goupille telle qu'une broche à bille.

Des variantes de réalisation peuvent être envisagées sans sortir du cadre de l'invention selon les revendications annexées.

Par exemple, le nombre de languettes 27 et de leviers 44 peut varier, au moins un crochet levier 44 étant nécessaire pour coopérer avec la gorge 42.

L'activation du dispositif 1 d'ouverture d'urgence peut se faire par d'autres moyens qu'un levier de commande 31, par exemple une crémaillère permettant de faire tourner le verrou rotatif 9.

Par ailleurs, le premier et le deuxième mode de réalisation peuvent être combinés.

## Revendications

1. Dispositif d'ouverture d'urgence d'une porte d'aéronef dotée d'un mécanisme d'ouverture, comprenant :
- des moyens d'actionnement (2, 5) adaptés à actionner le mécanisme d'ouverture, commutables entre un état passif et un état actif d'activation du mécanisme d'ouverture, et comprenant : un organe de manœuvretubulaire (2) doté d'une première extrémité (3) adaptée à être reliée à la porte, et d'une deuxième extrémité de verrouillage (4) ; des moyens élastiques de compression (5) disposés entre un élément de butée fixe (6) et l'organe de manœuvre (2) ; un organe de retenue de la deuxième extrémité de verrouillage (4), mobile entre une position fermée de verrouillage de la deuxième extrémité de verrouillage (4), dans une position de l'organe de manœuvre (2) correspondant à l'état passif des moyens d'actionnement dans laquelle les moyens élastiques (5) sont maintenus comprimés, et une position ouverte de libération de la deuxième extrémité de verrouillage (4) autorisant le déplacement de l'organe de manœuvre (2) selon un axe de déplacement (X) vers une position correspondant à l'état actif des moyens d'actionnement, sous l'effet de l'effort résultant de l'expansion des moyens élastiques (5) ;
- des moyens d'activation des moyens d'actionnement (2, 5) adaptés pour entrainer l'ouverture de l'organe de retenue ;
dans lequel
- l'organe de manœuvre (2) comporte un élément de première extrémité (10) et un élément de deuxième extrémité (11) qui sont librement mobiles l'un par rapport à l'autre en translation suivant l'axe de déplacement (X), la première extrémité (3) de l'organe de manœuvre (2) étant située sur l'élément de première extrémité (10) et la deuxième extrémité de verrouillage (4) de l'organe de manœuvre (2) étant située sur l'élément de deuxième extrémité (11) ; et
- l'élément de butée fixe (6) comporte des moyens de fixation (18) pour sa fixation sur un élément de porte de l'aéronef ;
ce dispositif d'ouverture d'urgence étant **caractérisé en ce que** :
- un cylindre d'axe (15) s'étendant suivant l'axe de déplacement (X) est fixé sur l'élément de butée fixe (6), l'élément de deuxième extrémité (11) étant monté coulissant le long de l'axe de déplacement (X) sur le cylindre d'axe (15) ;
- l'organe de retenue comporte un verrou d'ouverture sous charge rotatif (9) mobile en rotation autour de l'axe de déplacement (X), le verrou rotatif (9) étant axialement fixé sur le cylindre d'axe (15) entre deux butées axiales, le verrou rotatif (9) étant en liaison pivot non glissant sur le cylindre d'axe (15), le verrou rotatif (9) comportant au moins une languette (27) s'étendant parallèlement à l'axe de déplacement (X) et adaptée à retenir par traction sur une surface d'arrêt (30,43) la deuxième extrémité de verrouillage (4) de l'élément de deuxième extrémité (11) ;
- les moyens d'activation des moyens d'actionnement (2, 5) comportent un levier (31) solidaire du verrou rotatif (9) et permettant de commander la rotation du verrou (9).

2. Dispositif selon la revendication 1, **caractérisé en ce que** l'élément de première extrémité (10) et l'élément de deuxième extrémité (11) sont montés coulissants l'un sur l'autre.

3. Dispositif selon l'une quelconque des revendications précédentes, **caractérisé en ce que** l'élément de première extrémité (10) et l'élément de deuxième extrémité (11) sont emboités l'un dans l'autre.

4. Dispositif selon la revendication 3, **caractérisé en ce que** l'élément de première extrémité (10) et l'élément de deuxième extrémité (11) sont constitués d'éléments tubulaires.

5. Dispositif selon la revendication 4, **caractérisé en ce que** l'élément de première extrémité (10) et l'élément de deuxième extrémité (11) sont constitués de tubes, le tube constituant l'élément de première extrémité (10) étant inséré dans le tube constituant l'élément de deuxième extrémité (11).

6. Dispositif selon l'une des revendications 3 à 5, **caractérisé en ce que** l'organe de manœuvre (2) comporte un palier de glissement (12) pour le coulissement de l'élément de première extrémité (10) sur l'élément de deuxième extrémité (11).

7. Dispositif selon l'une quelconque des revendications précédentes, **caractérisé en ce que** l'élément de deuxième extrémité (11) comporte des moyens d'appui (8) pour les moyens élastiques (5).

8. Dispositif selon la revendication 7, **caractérisé en ce que** les moyens d'appui pour les moyens élastiques comportent une collerette (8) solidaire de l'élément de deuxième extrémité (11).

9. Dispositif selon l'une des revendications 7 ou 8, **caractérisé en ce que** les moyens élastiques (5) sont disposés entre l'élément de butée fixe (6) et les moyens d'appui (8).

10. Dispositif selon l'une des revendications 7 à 9, **caractérisé en ce que** l'élément de première extrémité (10) comporte une butée (13) coopérant avec les moyens d'appui (8) de sorte que, dans l'état actif des moyens d'actionnement, l'élément de deuxième extrémité (11) entraine l'élément de première extrémité (10).

11. Dispositif selon la revendication 10, **caractérisé en ce que** la butée comporte une collerette (13) solidaire de l'élément de deuxième extrémité (11).

12. Dispositif selon l'une des revendications précédentes, **caractérisé en ce que** l'élément de deuxième extrémité (11) comporte une portion de glissement (17) ajustée au cylindre d'axe (15).

13. Dispositif selon la revendication 12, **caractérisé en ce que** la portion de glissement (17) comporte un palier de glissement (37).

14. Dispositif selon l'une des revendications précédentes, **caractérisé en ce que** l'élément de deuxième extrémité (11) est monté coulissant à l'intérieur du cylindre d'axe (15).

15. Dispositif selon la revendication 14, **caractérisé en ce que** l'élément de deuxième extrémité (11) comporte une portion de glissement (17) ajustée au cylindre d'axe (15).

16. Dispositif selon l'une des revendications précédentes, **caractérisé en ce qu'**il comporte une butée de fin de course (21) pour le coulissement de l'organe de manœuvre (2) par rapport au cylindre d'axe (15).

17. Dispositif selon l'une quelconque des revendications précédentes, **caractérisé en ce que** l'élément de première extrémité (10) comporte des moyens d'accouplement du dispositif (1) avec la porte.

18. Dispositif selon l'une quelconque des revendications précédentes, **caractérisé en ce que** l'élément de première extrémité comporte un trou (35) d'évacuation de condensats.

## Patentansprüche

1. Notöffnungsvorrichtung für eine Flugzeugtür mit einem Öffnungsmechanismus, umfassend:
- Betätigungsmittel (2, 5), die dazu eingerichtet sind, den Öffnungsmechanismus zu betätigen, zwischen einem passiven Zustand und einem aktiven Zustand der Aktivierung des Öffnungsmechanismus umschaltbar sind und umfassen: ein rohrförmiges Betätigungselement (2) mit einem ersten Ende (3), das dazu eingerichtet ist, mit der Tür verbunden zu werden, und einem zweiten Verriegelungsende (4); elastische Kompressionsmittel (5), die zwischen einem feststehenden Anschlagelement (6) und dem Betätigungselement (2) angeordnet sind; ein Halteelement für das zweite Verriegelungsende (4), das beweglich ist zwischen einer geschlossenen Position der Verriegelung des zweiten Verriegelungsendes (4) in einer dem passiven Zustand der Betätigungsmittel entsprechenden Position des Betätigungselements (2), in welcher die elastischen Mittel (5) komprimiert gehalten werden, und einer offenen Position der Freigabe des zweiten Verriegelungsendes (4), welche die Verschiebung des Betätigungselements (2) unter der Einwirkung der aus der Ausdehnung der elastischen Mittel (5) resultierenden Kraft entlang einer Verschiebeachse (X) zu einer dem aktiven Zustand der Betätigungsmittel entsprechenden Position hin ermöglicht;
- Aktivierungsmittel für die Betätigungsmittel (2, 5), die dazu eingerichtet sind, das Öffnen des Halteelements zu bewirken;
wobei
- das Betätigungselement (2) ein Element des ersten Endes (10) und ein Element des zweiten Endes (11) aufweist, welche relativ zueinander translatorisch frei beweglich entlang der Verschiebeachse (X) sind, wobei das erste Ende (3) des Betätigungselements (2) sich am Element des ersten Endes (10) befindet und das zweite Verriegelungsende (4) des Betätigungselements (2) sich am Element des zweiten Endes (11) befindet; und
- das feststehende Anschlagelement (6) Befestigungsmittel (18) für seine Befestigung an einem Türelement des Flugzeugs aufweist;
wobei diese Notöffnungsvorrichtung **dadurch gekennzeichnet ist, dass**:
- ein Achsenzylinder (15), der sich entlang der Verschiebeachse (X) erstreckt, an dem feststehenden Anschlagelement (6) befestigt ist, wobei das Element des zweiten Endes (11) auf dem Achsenzylinder (15) entlang der Verschiebeachse (X) verschiebbar gelagert ist;
- das Halteelement einen Drehriegel (9) zum Öffnen unter Belastung aufweist, der um die Verschiebeachse (X) drehbar gelagert ist, wobei der Drehriegel (9) axial auf dem Achsenzylinder (15) zwischen zwei axialen Anschlägen befestigt ist, wobei der Drehriegel (9) in nicht gleitender Schwenkverbindung auf dem Achsenzylinder (15) angebracht ist, wobei der Drehriegel (9) wenigstens eine Zunge (27) aufweist, die sich parallel zur Verschiebeachse (X) erstreckt und dazu eingerichtet ist, durch Zug an einer Anschlagfläche (30, 43) das zweite Verriegelungsende (4) des Elements des zweiten Endes (11) zu halten;
- die Aktivierungsmittel für die Betätigungsmittel (2, 5) einen Hebel (31) aufweisen, der mit dem Drehriegel (9) fest verbunden ist und ermöglicht, die Drehung des Riegels (9) zu steuern.

2. Vorrichtung nach Anspruch 1, **dadurch gekennzeichnet, dass** das Element des ersten Endes (10) und das Element des zweiten Endes (11) verschiebbar aufeinander gelagert sind.

3. Vorrichtung nach einem der vorhergehenden Ansprüche, **dadurch gekennzeichnet, dass** das Element des ersten Endes (10) und das Element des zweiten Endes (11) ineinandergeschoben sind.

4. Vorrichtung nach Anspruch 3, **dadurch gekennzeichnet, dass** das Element des ersten Endes (10) und das Element des zweiten Endes (11) aus rohrförmigen Elementen bestehen.

5. Vorrichtung nach Anspruch 4, **dadurch gekennzeichnet, dass** das Element des ersten Endes (10) und das Element des zweiten Endes (11) aus Rohren bestehen, wobei das Rohr, aus dem das Element des ersten Endes (10) besteht, in das Rohr eingesetzt ist, aus dem das Element des zweiten Endes (11) besteht.

6. Vorrichtung nach einem der Ansprüche 3 bis 5, **dadurch gekennzeichnet, dass** das Betätigungselement (2) ein Gleitlager (12) zum Verschieben des Elements des ersten Endes (10) auf dem Element des zweiten Endes (11) aufweist.

7. Vorrichtung nach einem der vorhergehenden Ansprüche, **dadurch gekennzeichnet, dass** das Element des zweiten Endes (11) Abstützmittel (8) für die elastischen Mittel (5) aufweist.

8. Vorrichtung nach Anspruch 7, **dadurch gekennzeichnet, dass** die Abstützmittel für die elastischen Mittel einen Flansch (8) umfassen, der mit dem Element des zweiten Endes (11) fest verbunden ist.

9. Vorrichtung nach einem der Ansprüche 7 oder 8, **dadurch gekennzeichnet, dass** die elastischen Mittel (5) zwischen dem feststehenden Anschlagelement (6) und den Abstützmitteln (8) angeordnet sind.

10. Vorrichtung nach einem der Ansprüche 7 bis 9, **dadurch gekennzeichnet, dass** das Elements des ersten Endes (10) einen Anschlag (13) aufweist, der mit den Abstützmitteln (8) so zusammenwirkt, dass im aktiven Zustand der Betätigungsmittel das Element des zweiten Endes (11) das Element des ersten Endes (10) antreibt.

11. Vorrichtung nach Anspruch 10, **dadurch gekennzeichnet, dass** der Anschlag einen Flansch (13) aufweist, der mit dem Element des zweiten Endes (11) fest verbunden ist.

12. Vorrichtung nach einem der vorhergehenden Ansprüche, **dadurch gekennzeichnet, dass** das Element des zweiten Endes (11) einen Gleitabschnitt (17) aufweist, der an den Achsenzylinder (15) angepasst ist.

13. Vorrichtung nach Anspruch 12, **dadurch gekennzeichnet, dass** der Gleitabschnitt (17) ein Gleitlager (37) aufweist.

14. Vorrichtung nach einem der vorhergehenden Ansprüche, **dadurch gekennzeichnet, dass** das Element des zweiten Endes (11) im Inneren des Achsenzylinders (15) verschiebbar gelagert ist.

15. Vorrichtung nach Anspruch 14, **dadurch gekennzeichnet, dass** das Element des zweiten Endes (11) einen Gleitabschnitt (17) aufweist, der an den Achsenzylinder (15) angepasst ist.

16. Vorrichtung nach einem der vorhergehenden Ansprüche, **dadurch gekennzeichnet, dass** sie einen Endanschlag (21) für das Verschieben des Betätigungselements (2) in Bezug auf den Achsenzylinder (15) aufweist.

17. Vorrichtung nach einem der vorhergehenden Ansprüche, **dadurch gekennzeichnet, dass** das Element des ersten Endes (10) Mittel zur Kopplung der Vorrichtung (1) mit der Tür aufweist.

18. Vorrichtung nach einem der vorhergehenden Ansprüche, **dadurch gekennzeichnet, dass** das Element des ersten Endes ein Loch (35) zum Ableiten von Kondensaten aufweist.

## Claims

1. An emergency opening device for an aircraft door fitted with an opening mechanism, comprising:
- actuating means (2, 5) designed to actuate the opening mechanism, which can switch between a passive state and an active state of activating the opening mechanism, and which comprise: a tubular operating member (2) provided with a first end (3) designed to be connected to the door, and with a locking second end (4); elastic compression means (5) arranged between a fixed end-stop element (6) and the operating member (2); a retainer for restraining the locking second end (4), able to move between a closed position of locking of the locking second end (4), in a position of the operating member (2) corresponding to the passive state of the actuating means in which position the elastic means (5) are kept compressed, and an open position of releasing of the locking second end (4) allowing the operating member (2) to move along an axis of movement (X) toward a position corresponding to the active state of the actuating means, under the effect of the force resulting from the expansion of the elastic means (5);
- means for activating the actuating means (2, 5) designed to bring about the opening of the retainer wherein;
- the operating member (2) comprises a first-end element (10) and a second-end element (11) which are able to move freely relative to one another in translation along the axis of movement (X), the first end (3) of the operating member (2) being situated on the first-end element (10) and the locking second end (4) of the operating member (2) being situated on the second-end element (11); and
- the fixed end-stop element (6) comprises fixing means (18) for fixing it to an aircraft door element; this emergency opening device wherein:
- an axis cylinder (15) extending along the axis of movement (X) is fixed to the fixed end-stop element (6), the second-end element (11) being mounted with the ability to slide along the axis of movement (X) on the axis cylinder (15);
- the retainer comprises a rotary latch (9) that can be opened under load capable of rotational motion about the axis of movement (X), the rotary latch (9) being axially fixed on the axis cylinder (15) between two axial end-stops, the rotary latch (9) being in non-sliding pivoting connection with the axis cylinder (15), the rotary latch (9) comprising at least one blade (27) extending parallel to the axis of movement (X) and designed to retain, by traction on a stop surface (30, 43), the locking second end (4) of the second-end element (11);
- the means for activating the actuating means (2, 5) comprise a lever (31) solidly attached to the rotary latch (9) and allowing the latch (9) to be forced to rotate.

2. The device as claimed in claim 1, **characterized in that** the first-end element (10) and the second-end element (11) are mounted slidingly on one another.

3. The device as claimed in either of the preceding claims, **characterized in that** the first-end element (10) and the second-end element (11) are nested one inside the other.

4. The device as claimed in claim 3, **characterized in that** the first-end element (10) and the second-end element (11) consist of tubular elements.

5. The device as claimed in claim 4, **characterized in that** the first-end element (10) and the second-end element (11) consist of tubes, the tube constituting the first-end element (10) being inserted inside the tube constituting the second-end element (11).

6. The device as claimed in one of claims 3 to 5, **characterized in that** the operating member (2) comprises a sliding bearing (12) allowing the first-end element (10) to slide over the second-end element (11).

7. The device as claimed in any one of the preceding claims, **characterized in that** the second-end element (11) comprises abutment means (8) for the elastic means (5).

8. The device as claimed in claim 7, **characterized in that** the abutment means for the elastic means comprise a flange (8) solidly attached to the second-end element (11).

9. The device as claimed in one of claims 7 and 8, **characterized in that** the elastic means (5) are positioned between the fixed end-stop element (6) and the abutment means (8).

10. The device as claimed in one of claims 7 to 9, **characterized in that** the first-end element (10) comprises an end-stop (13) collaborating with the abutment means (8) so that when the actuating means are in the active state, the second-end element (11) drives the first-end element (10).

11. The device as claimed in claim 10, **characterized in that** the end-stop comprises a flange (13) solidly attached to the second-end element (11).

12. The device as claimed in one of the preceding claims, **characterized in that** the second-end element (11) comprises a sliding portion (17) tailored to fit the axis cylinder (15).

13. The device as claimed in claim 12, **characterized in that** the sliding portion (17) comprises a sliding bearing (37).

14. The device as claimed in one of the preceding claims, **characterized in that** the second-end element (11) is mounted with the ability to slide inside the axis cylinder (15).

15. The device as claimed in claim 14, **characterized in that** the second-end element (11) comprises a sliding portion (17) tailored to fit the axis cylinder (15).

16. The device as claimed in one of the preceding claims, **characterized in that** it comprises an end-of-travel stop (21) for the sliding of the operating member (2) with respect to the axis cylinder (15).

17. The device as claimed in any one of the preceding claims, **characterized in that** the first-end element (10) comprises coupling means for coupling the device (1) to the door.

18. The device as claimed in any one of the preceding claims, **characterized in that** the first-end element comprises a condensate discharge hole (35)
